# EUROPÄISCHE PATENTSCHRIFT

(11) **EP 1 432 911 B1**
(45) Veröffentlichungstag und Bekanntmachung des Hinweises auf die Patenterteilung: **17.12.2008**
(21) Anmeldenummer: 02748821.2
(22) Anmeldetag: 26.06.2002
(51) Int. Cl.: F03D 11/00

(54) **FRÜHWARNSYSTEM FÜR WINDENERGIEANLAGEN MIT SODAR**
EARLY-WARNING SYSTEM COMPRISING SODAR FOR WIND ENERGY TURBINES
SYSTEME D'ALERTE RAPIDE POUR INSTALLATIONS D'ENERGIE EOLIENNE A SODAR

(30) Priorität: 31.07.2001 DE 10137272
(43) Veröffentlichungstag der Anmeldung: 30.06.2004
(60) Teilanmeldung: 08154907.3
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/007043
(87) Internationale Veröffentlichungsnummer: WO 2003/012293

(56) Entgegenhaltungen:
- WO-A-96/18916
- WO-A-98/42980
- GB-A- 2 280 035
- US-A- 4 651 017
- HARDESTY R M ET AL: "LIDAR MEASUREMENT OF TURBULENCE ENCOUNTERED BY HORIZONTAL-AXIS WIND TURBINES" JOURNAL OF ATMOSPHERIC AND OCEANIC TECHNOLOGY, AMERICAN METEOROLOGICAL SOCIETY, BOSTON, MA, US, Bd. 4, 1. März 1987 (1987-03-01), Seiten 191-203, XP000749189 ISSN: 0739-0572
- T.S.PERRY: "Tracking weather's flight path" IEEE SPECTRUM ONLINE, [Online] Bd. 37, Nr. 9, September 2000 (2000-09), XP002216354 Gefunden im Internet: <URL:www.rap.ucar.edu/general/press/ieeeco verstory.html> [gefunden am 2002-10-10]

## Beschreibung

Windenergieanlagen sind je nach Größe und Leistungsauslegung retativ teure Investitionsgüter, die gegen Zerstörung Beschädigung oder andere den Ausfall einer Windenergieanlage herbeiführende Ursachen zu schützen sind, wenn die für die Windensrgieanlage versprochene lange Lebensdauer erreicht werden soll. Gleichzeitig besteht bei Windenergieanlagen stets der Wunsch, diese mit der maximal möglichen Leistung zu betreiben, damit auch eine maximal große Energieausbeute erzielt werden kann. Beide Ziele, nämlich die lange Lebensdauer einerseits und die höchstmögliche Energieausbeute andererseits stehen sich zum Teil diametral gegenüber, schließlich wäre es zwar grundsätzlich möglich, eine Windenergieanlage auch teilweise im Überlastbereich zu fahren, wodurch die Energieausbeute erhöht wird, was jedoch auch gleichzeitig zu einer deutlichen Verkürzung der Lebensdauer führen würde. Wird eine Windenergieanlage hingegen nur in ganz geringen Windgeschwindigkeitsbereichen gefahren, so ist die Anlage sicherlich besser als andere geschützt, jedoch von ihrer Energieausbeute unzureichend.

Aus der WO-A 98/42980 ist eine Windenergieanlage bekannt, bei der mit Hilfe eines Windgeschwindlgkeitsmesssystems zum Bestimmen von Windgeschwindigkeiten vor der Windenergieanlage eine Steuerung des Anstellwinkels eines Rotorblattes der Winderiergleanlage in Abhängigkeit der bestimmten Windgeschwindigkeit vorgenommen wird, wobei die Windgeschwindigkeit mit Hilfe eines Laserstrahls bestimmt wird.

Aus der US 4,651,017 ist eine Windenergieanlage bekannt, bei der die Windgeschwindigkeit mit Hilfe eines Laserstrahls vor der Windenergieanlage bestimmt wird, um die Windenergieanlage zu steuern.

Aus der US 5,979,234 ist ein akustisches Windmessverfahren bekannt, wobei die Windgeschwindigkeit zwischen einer Geräuschquelle an einem bekannten Ort und einem in einem Abstand zu dieser Geräuschquelle befindlichen Detektor, bevorzugt auf Flughäfen, ermittelt wird.

Aufgabe der Erfindung ist es, Maßnahmen und Möglichkeiten anzugeben, wie eine Windenergieanlage vor Beschädigungen oder den Ausfall einer Windenergieanlage herbeiführenden Umständen geschützt werden kann, wobei jedoch gleichzeitig auch noch eine maximal mögliche Energieausbeute erfolgen kann.

Die Aufgabe wird mittels einer Erfindung mit den Merkmalen nach Anspruch 1 oder 2 gelöst. Vorteilhafte Weiterbildungen sind in den Unteransprüchen beschrieben.

Die Erfindung beruht auf der Erkenntnis, nicht nur wie bisher die Windverhältnisse an einer Windenergieanlage mittels Anemometer zu messen, sondern auch diese Messergebnisse für Windenergieanlagen, die in Windrichtung hinter der ersten Windenergieanlage angeordnet sind, zu verwenden, so dass diese im Bedarfsfall, z.B, bei Auftreten einer Böe, noch rechtzeitig vor dem Auftreffen der Böe auf die Windenergieanlage eine Blatteinstellwinkeländerung vornehmen kann, und dass dann beim Auftreffen der Böe auf die Windenergieanlage die Belastung nicht so groß wird, dass dies noch zu Schäden führen kann.

Das erfindungsemäße Frühwarnsystem basiert auf grundsätzlich zwei z.T. unterschiedlichen Ansätzen, die jedoch miteinander auch kombiniert werden können und sich dann gegenseitig ergänzen.

Eine Möglichkeit besteht darin, an der Windenergieanlage selbst, bevorzugt an deren Gondel, beispielsweise im vorderen Nabenbereich vor dem Rotor, ein sogenanntens SODAR-System (siehe z.B. http://aku100.physik.uni-oldenburg.de/Schallausbreitung/sodar1) anzubringen. Solche SODAR-Systeme (Sonic Detection and Ranging) sind in der Lage, dreidimensional die Windverhältnisse (online) in einer gewünschten Richtung (in Windrichtung) vor der Windenergieanlage zu erfassen. Wird also ein SODAR-System an einer Gondel der Windenergieanlage angebracht und auf den Bereich vor dem Rotor der Windenergieanlage ausgerichtet, so braucht keine Nachverstellung zu erfolgen (da das SODAR-System stets mit der Gondel in Richtung der Hauptwindrichtung ausgerichtet ist) und den Bereich vor dem Rotor der Windenergieanlage dahingehend beobachten kann, ob Böen auftreten.

Zwar sind die SODAR-Systeme bislang grundsätzlich bekannt, jedoch werden diese bislang nur stationär aufgebaut oder als mobile Anlagen auf einem Anhänger transportiert und dienen dann lediglich zur einmaligen Vermessung eines Windprofils in einem bestimmten Bereich.

Erfindungsgemäß werden solche SODAR-Systeme an der Windenergieanlage belassen und nicht nur einmalig stationär aufgebaut, so dass beim Herannahen einer Böe, die zur unerwünschten Überlastung der Windenergieanlage führen könnte, dies rechtzeitig erkannt wird und noch vor dem Auftreffen der Böe auf die Windenergieanlage die Rotorblätter entsprechend eingestellt werden, so dass die mit der Böe einhergehende Belastung auf die Windenergieanlage deutlich geringer ist als bei unverstellten Rotorblättern.

Ist das SODAR-System an einer Windenergieanlage (oder mehreren) angebracht, welche in einem Windpark steht und ist diese Windenergieanlage in dem Randbereich des Windparks aufgestellt auf den der herannahende Wind zuerst trifft, so können die vom SODAR-System gemessenen Daten nicht nur in der Windenergieanlage verarbeitet werden, die das SODAR-System trägt, sondern auch von allen weiteren Windenergieanlagen, die in Windrichtung hinter der mit dem SODAR-System ausgerüsteten Windenergieanlage stehen, so dass auch dort die durchgehende Böe oder andere ungünstige Windverhältnisse keinerlei Schaden anrichten können, wenn die Windenergieanlagen entsprechend die Rotorblätter in den Wind stellen und somit für eine Böe oder andere ungünstige Windverhältnisse unangreifbar werden.

Bei Windparks ist aber auch eine Alternative für ein Frühwarnsystem möglich, indem die bisherigen Anemometer und Belastungsmesseinrichtungen, die an einer Windenergieanlage angebracht sind, dazu verwendet werden, nicht nur Daten zu liefern, die für die Windenergieanlage wichtig sind, die das Anemometer oder die Belastungsmesseinrichtung trägt, sondern auch für die Windrichtung hinter der Windenergieanlage mit dem Anemometer verwertet werden. Misst beispielsweise das Anemometer sehr große Windstärken, so können entsprechende Informationen an die weiteren Anlagen, die in Windrichtung hinter der betroffenen Windenergieanlage stehen, abgegeben werden und diese können dann noch frühzeitig vor Auftreffen der unerwünschten, belastungsgefährdenden Windverhältnisse die Rotorblätter so anstellen oder andere Maßnahmen ergreifen, z.B. Anlagen völlig abstellen, dass die durch die ungünstigen Windverhältnisse hervorgerufenen Belastungen und damit eventuell entstehende Schäden möglichst gering, vorzugsweise ganz vermieden werden.

Eine Einstellung der Rotorblätter in den Wind führt regelmäßig dazu, dass die dem Wind ausgesetzte Fläche der Rotorblätter abnimmt und dies kann unter Umständen auch zu einer Verringerung der elektrischen Leistung führen. Dieser Nachteil wird jedoch in Kauf genommen, wenn mit der Vermeidung von Überlastungen die damit einhergehenden Beschädigungen vermieden werden können, schließlich können schon wenige Überlastungsfälle die Lebensdauer der gesamten Anlage deutlich reduzieren, so dass eine vorübergehend verringerte Leistung kaum ins Gewicht fällt, wenn man diese für die gesamte Lebensdauer der Windenergieanlage in Betracht zieht.

Das erfindungsgemäße Frühwarnsystem, bei welchem Daten (Wind-, Belastungsdaten), die an einer Windenergieanlage gemessen werden auch für andere Windenergieanlagen verwendet werden können, setzt ein Kommunikationsnetzwerk zwischen den Windenergieanlagen eines Windparks voraus, wobei die Datenübertragung drahtlos oder auch leitungsgebunden erfolgen kann und für die Übertragung selbst bereits bekannte Netztechnologien verwendet werden können.

Die Datenübermittlung kann hierbei von Anlage zu Anlage als auch über eine zentrale Steuerung erfolgen. Die zentrale Steuerung kann wiederum die Informationen bezüglich der Windverhältnisse, die bei der Anlage gemessen werden, an alle oder ausgewählte Windenergieanlagen (z.B. die im "Windschatten" einer bestimmten Anlage) eines Windparks weiterleiten und/oder ihrerseits die erforderlichen Steuerurigssignale bereitstellen und den jeweiligen Windenergieanlagen übermitteln. Natürlich ist auch eine Kombination von SODAR und Anemometer-Messerfassungen denkbar, so dass einerseits die Übermittlung von Anlage zu Anlage und andererseits über eine zentrale Steuerung erfolgen kann, so dass eine Informationsredundanz vorhanden ist, die z.B. eine Fehlerkorrektur ermöglicht. Weiterhin kann eine Plausibilitätsprüfung z.B. derart erfolgen, dass die von der Zentralsteuerung ausgegebene Steuerungsanweisung für die Windenergieanlage anhand der von Anlage zu Anlage übermittelten Windgeschwindigkeits- bzw. Windrichtungsdaten überprüft werden und nur bei festgestellter Plausibilität ausgeführt wird.

Andererseits kann natürlich auch jede Anlage anhand der zwischen den Anlagen übermittelten Daten in ihrer eigenen Steuerungsvorrichtung eine entsprechende Steuerung vornehmen und eine Zentralsteuerung führt eine entsprechende Überwachung durch.

Da die Entfernung zwischen den einzelnen Windenergieanlagen eines Windparks unveränderlich sind, kann anhand der bekannten Windgeschwindigkeit bei Auftreten ungünstiger Windverhältnisse recht zuverlässig (voraus-)berechnet werden, wann die entsprechend ungünstigen Windverhältnisse, z.B. die Böe, welche Anlage erreicht.

Dementsprechend kann z.B. eine windgeschwindigkeitsabhängige Vorlaufzeit errechnet werden, welche die Anlage benötigt, um die erforderliche Einstellung (Anstellwinkel der Rotorblätter zum Wind) vorzunehmen. Alternativ oder ergänzend kann eine fixe Komponente für die Vorlaufzeit eingeführt werden.

Aufgrund der Abstände zwischen den einzelnen Windenergieanlagen und den Windgeschwindigkeiten sollten die sich ergebenden Vorwamzeiten regelmäßig ausreichen, um die Blattwinkel rechtzeitig zu verändern (die Pitchgeschwindigkeit liegt bei etwa 4 bis 8°/Sekunde).

Wie erwähnt kann die Ermittlung der Informationen bezüglich der Windverhältnisse, die bei einer Windenergieanlage gemessen werden, grundsätzlich bei allen Windenergieanlagen eines Windparks erfolgen. Eine Alternative kann eine windrichtungsabhängige Informationsübermittlung sein, wobei dann ein Öffnungswinkel vorgesehen sein könnte, um wenigstens den unmittelbar neben dem Windpfad liegenden Anlagen die Informationen mitzuteilen. Dieser Öffnungswinkel kann wiederum fix oder abhängig von Windrichtungsschwankungen gewählt werden.

Natürlich können im Zuge der Informationsübermittlung neben den reinen Windgeschwindigkeits- und Windrichtungsdaten auch weitere Daten wie Kennungen von Absender- und Ziel-Windenergieanlagen, Fehlerkorrekturcodes oder ähnliche Informationen übermittelt werden.

Die besondere Berücksichtigung der Windrichtung erscheint unter dem Aspekt sinnvoll, da bei einer wesentlichen konstanten Windrichtung immer noch lokale Böen auftreten, die nur einen Teil der Windenergieanlagen erreichen (können), so dass unter dem Gesichtspunkt der Ertragsoptimierung auch nur die wirklich auf dem Weg einer solchen Böe liegenden Windenergieanlagen entsprechend gesteuert werden müssen, so dass die dort auftretende Belastung möglichst gering ausfällt.

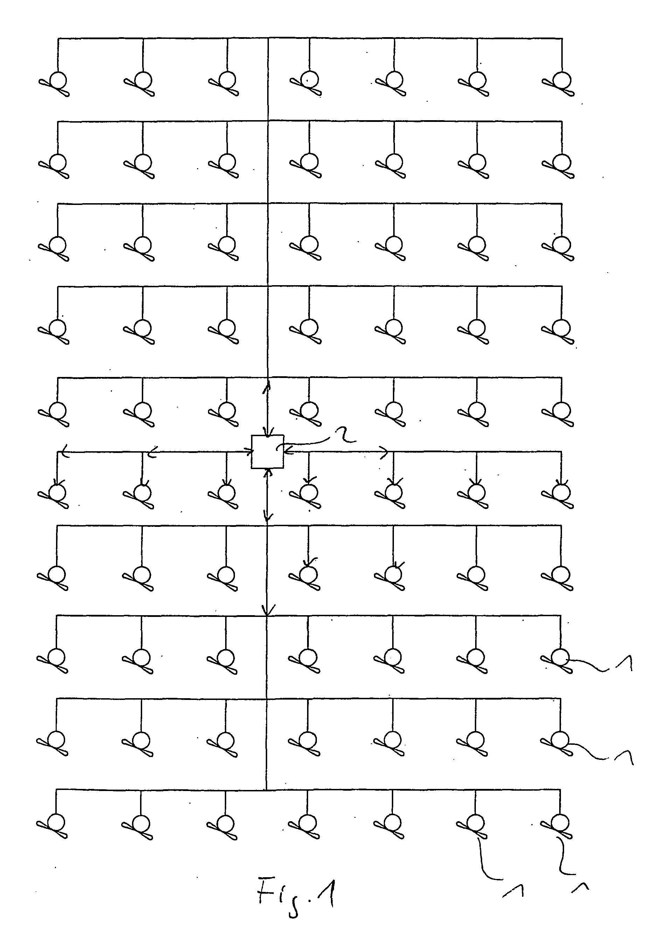

Figur 1 zeigt beispielhaft eine Windparkanordnung mit einer Vielzahl von Windenergieanlagen 1, die jeweils mit einer zentralen Steuerung 2 verbunden sind. Die zentrale Steuerung kann hierbei gemessene Daten einzelner Anlagen entsprechend verarbeiten und auch entsprechende Steuersignale für einzelne Anlagen bereitstellen.

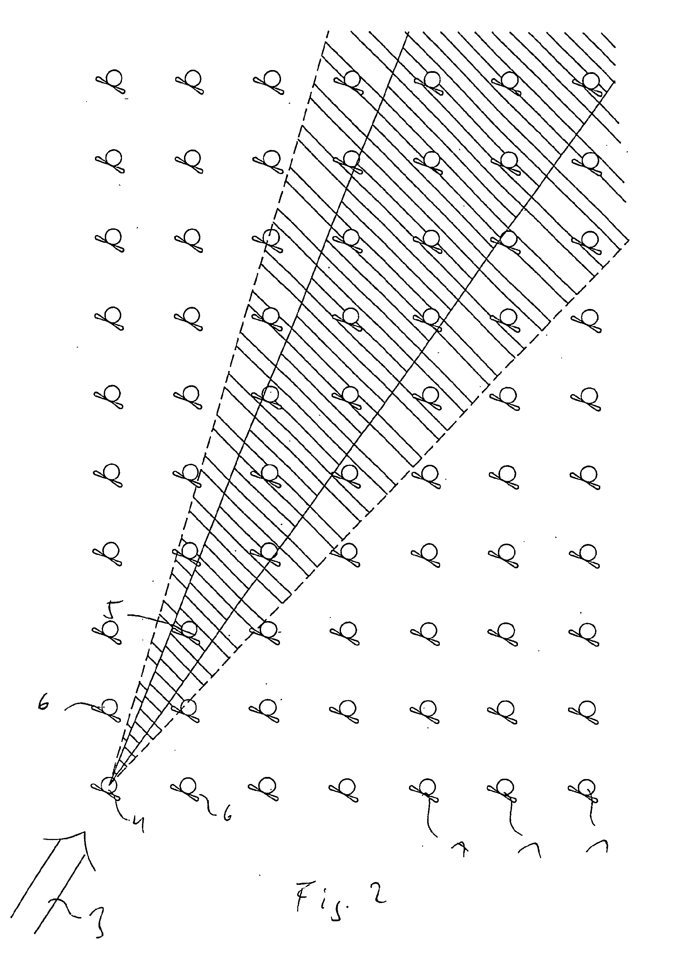

Figur 2 zeigt beispielhaft einen typischen Anwendungsfall. Hierbei strömt der Wind 3 eine bestimmte Anlage 4 zuerst an, die ihrerseits die gemessenen Daten an eine Zentralsteuerung oder auf eine andere Art und Weise (nicht Zentralsteuerung) an andere Anlagen weitergibt. Es ist zu erwarten, dass der Wind, der auf die Anlage trifft, auch die Anlagen treffen wird, die im unmittelbaren Windschatten der Anlage angeordnet sind (enge Schraffur). Es ist aber durchaus möglich, auch den Öffnungswinkel weiter zu machen (breitere Schraffur), um somit einen breiteren "Windschatten" zu definieren, so dass bei sämtlichen Anlagen die teilweise oder vollständig in den schraffierten Bereich fallen, die Messergebnisse der ersten Anlage also auch dazu verwendet werden können, die weiteren Anlagen im Windschatten der ersten Anlage so zu steuern, dass Beschädigungen der weiteren Anlagen nicht auftreten und diese damit auch durch die Auswertung der Messergebnisse der ersten Anlage geschützt werden.

Statt einer zentralen Steuerung 2 kann - wie bereits beschrieben - auch ein anderes Steuerungskonzept angewandt werden. So kann beispielsweise auch dieses Konzept so aussehen, dass zwischen benachbarten Anlagen oder zwischen Windenergieanlagen eines bestimmten Bereichs Daten-(Funk-)Verbindungen bestehen und Messdaten auf diese Art und Weise auch drahtlos und ohne zentrale Steuerung zwischen Windenergieanlagen ausgetauscht werden können.

Auch ist es möglich, dass bei Auftreten einer bestimmten Windlage, z.B. bei Böen nicht nur die konkret betroffene Anlage verstellt wird, sondern sämtliche Anlagen in unmittelbarer Nachbarschaft zu dieser Anlage oder Anlagen, die in einem bestimmten geographischen Verhältnis zu der betroffenen Anlage stehen. Dies können z.B. nach Figur 2 auch die Windenergieanlagen 6 sein, die links und rechts von der betroffenen Anlage in Windrichtung stehen.

Ist die erste Anlage 4 nach Figur 2 mit einem SODAR ausgerüstet, so kann bereits bei Eintreffen der Böe auf die erste Windenergieanlage diese gemessen werden und entsprechende Vorkehrungen auch an der ersten Windenergieanlage getroffen werden, damit etwaige Beschädigungen vermieden werden.

## Patentansprüche

1. Windenergieanlage mit einem akustischen System zum Erfassen der Windgeschwindigkeit, nämlich mit einem SODAR, welches an der Gondel der Windenergieanlage, angebracht ist und welches den Bereich vor dem Rotor der Windenergieanlage erfasst, wobei das SODAR im Bereich der Rotornabe der Windenergieanlage vor der Rotorebene des Rotors der Windenergieanlage angebracht ist..

2. Windenergieanlage nach Anspruch 1,
**dadurch gekennzeichnet, dass** das SODAR die Windverhältnisse vor dem Rotor misst und entsprechende Messdaten an eine Steuerung der Windenergieanlage weiterleitet, die ihrerseits bei Auftreten besonders unerwünschter Windverhältnisse, z.B. bei Auftreten von Böen, den Anstellwinkel der Rotorblätter entsprechend ändert, um somit die gesamte Anlage vor unerwünschten Belastungen und Zerstörungen zu bewahren.

3. Windpark mit mehreren Windenergieanlagen nach einem der vorhergehenden Ansprüche 1 oder 2, mit einem Frühwarnsystem zum Schutz von Windenergieanlagen in einem Windpark, mit Mitteln zur Messung der Windverhältnisse im Bereich einer ersten Windenergieanlage, wobei die gemessenen Daten von einer Steuerungseinrichtung verarbeitet werden, die die erste Windenergieanlage und/oder eine andere zweite Windenergieanlage in der Nähe der ersten Windenergieanlage steuert, wobei die Steuerung insbesondere in der Einstellung des Anstellwinkels des Rotorblattes zum Wind (Pitch) besteht und eine Verstellung des Anstellwinkels vorgenommen wird, sobald eine die erste Windenergieanlage gefährdende Windlage gemessen wird.

4. Windpark mit mehreren Windenergieanlagen nach einem der vorhergehenden Ansprüche 1 oder 2,
wobei die Messdaten einer ersten Windenergieanlage des Windparks, die dem Wind zuerst ausgesetzt ist, an wenigstens eine zweite Windenergieanlage, die in Windrichtung hinter der ersten Windenergieanlage angeordnet ist, übertragen werden und in Abhängigkeit der gemessenen Daten über die Windlage im Bereich der ersten Windenergieanlage die zweite Windenergieanlage im Windschatten der ersten Windenergieanlage gesteuert wird.

5. Windenergieanlage nach einem der Ansprüche 1 oder 2, mit einer Vorrichtung zur Erfassung der Windverhältnisse im Bereich der Windenergieanlage, **gekennzeichnet durch** eine Vorrichtung zum Senden/Empfangen von Windgeschwindigkeits- und/oder Windrichtungsinformationen zu/von wenigstens einer der weiteren Windenergieanlagen im Windpark.

6. Windenergieanlage mit einer Vorrichtung zur Erfassung der Windverhältnisse nach einem der Ansprüche 1 oder 3 und 5,
**dadurch gekennzeichnet, dass** die Vorrichtung zur Erfassung der Windgeschwindigkeit mit Schallwellen, bevorzugt mit Ultraschallwellen nach Art eines SODARs, arbeitet.

7. Windenergieanlage nach Anspruch 6,
**dadurch gekennzeichnet, dass** die Vorrichtung zur Erfassung der Windgeschwindigkeit wenigstens teilweise im Bereich der Gondel der Windenergieanlage angeordnet ist.

8. Windenergieanlage nach Anspruch 7,
**dadurch gekennzeichnet, dass** die Vorrichtung zur Erfassung der Windgeschwindigkeit die Windgeschwindigkeit dreidimensional erfasst.

## Claims

1. Wind power installation having an acoustic system for detecting the wind speed, namely having a SODAR, which is mounted on the nacelle of the wind power installation and which senses the region in front of the rotor of the wind power installation, wherein the SODAR is mounted in the region of the rotor hub of the wind power installation, in front of the rotor plane of the rotor of the wind power installation.

2. Wind power installation according to claim 1.
**characterised in that** the SODAR measures the wind conditions in front of the rotor and transmits corresponding measurement data to a control of the wind power installation, which in turn, when particularly undesirable wind conditions occur, for example when gusts occur, suitably alters the angle of attack of the rotor blades in order thereby to protect the entire installation from unwanted loading and damage.

3. Wind farm comprising a plurality of wind power installations according to either of claims 1 and 2, having an early warning system for protecting wind power installations in a wind farm, comprising means for measuring the wind conditions in the region of a first wind power installation, wherein the measured data are processed by a control device which controls the first wind power installation and/or another, second wind power installation in the vicinity of the first wind power installation, wherein the control consists especially in setting the angle of attack of the rotor blade with respect to the wind (pitch), and adjustment of the angle of attack is effected as soon as a wind situation endangering the first wind power installation is measured.

4. Wind farm comprising a plurality of wind power installations according to either of claims 1 and 2,
wherein the measured data of a first wind power installation of the wind farm, which is first exposed to the wind, are transmitted to at least a second wind power installation which in the direction of the wind is behind the first wind power installation, and the second wind power installation in the lee of the first wind power installation is controlled in dependence on the measured data on the wind situation in the region of the first wind power installation.

5. Wind power installation according to either of claims 1 and 2, having a device for detecting the wind conditions in the region of the wind power installation, **characterised by** a device for transmitting/receiving wind speed and/or wind direction information to/from at least one of the further wind power installations in the wind farm.

6. Wind power installation having a device for detecting the wind conditions according to any one of claims 1 or 3 and 5,
**characterised in that** the device for detecting the wind speed operates with sound waves, preferably with ultrasonic waves in the manner of a SODAR.

7. Wind power installation according to claim 6,
**characterised in that** the device for detecting the wind speed is arranged at least partly in the region of the nacelle of the wind power installation.

8. Wind power installation according to claim 7,
**characterised in that** the device for detecting the wind speed detects the wind speed three-dimensionally.

## Revendications

1. Éolienne comportant un système acoustique pour détecter la vitesse du vent, notamment comportant un SODAR, qui est placé dans la nacelle de l'éolienne et qui détecte la zone devant le rotor de l'éolienne, dans laquelle le SODAR est placé dans la zone du moyeu du rotor de l'éolienne devant le plan de rotor du rotor de l'éolienne.

2. Éolienne selon la revendication 1, **caractérisée en ce que** le SODAR mesure les conditions de vent devant le rotor et transmet les données mesurées correspondantes à une commande de l'éolienne, qui modifie de son côté l'angle d'incidence des pales du rotor de façon appropriée lors de l'apparition de conditions de vent particulièrement non désirées, par exemple lors de l'apparition de rafales, afin de préserver l'ensemble de l'éolienne de sollicitations non désirées et de détériorations.

3. Parc éolien comportant plusieurs éoliennes selon l'une des revendications précédentes 1 ou 2, comportant un système d'alerte rapide pour protéger les éoliennes dans un parc éolien, comportant des moyens pour mesurer les conditions de vent dans la zone d'une première éolienne, dans lequel les données mesurées sont traitées par un dispositif de commande, qui commande la première éolienne et/ou une seconde éolienne à proximité de la première éolienne, dans lequel la commande concerne en particulier le réglage de l'angle d'incidence de la pale du rotor par rapport au vent (pas) et un positionnement de l'angle d'incidence est réalisé, dès qu'une condition de vent menaçant la première éolienne est mesurée.

4. Parc éolien comportant plusieurs éoliennes selon l'une des revendications précédentes 1 ou 2, dans lequel les données mesurées d'une première éolienne du parc éolien, qui est exposée au vent, sont transmises à au moins une seconde éolienne, qui est disposée dans le sens du vent derrière la première éolienne et la seconde éolienne se trouvant à l'abri du vent de la première éolienne est commandée conformément aux données mesurées concernant la condition de vent dans la zone de la première éolienne.

5. Éolienne selon l'une des revendications 1 ou 2, comportant un dispositif pour détecter les conditions de vent dans la zone de l'éolienne, **caractérisée par** un dispositif pour émettre/recevoir des informations concernant la vitesse du vent et/ou le sens du vent vers/depuis au moins l'une des autres éoliennes du parc éolien.

6. Éolienne comportant un dispositif pour détecter les conditions de vent selon l'une des revendications 1 ou 3 et 5, **caractérisée en ce que** le dispositif pour détecter la vitesse du vent fonctionne avec des ondes sonores, de préférence avec des ondes ultrasoniques, comme un SODAR.

7. Éolienne selon la revendication 6, **caractérisée en ce que** le dispositif pour détecter la vitesse du vent est disposé au moins partiellement dans la zone de la nacelle de l'éolienne.

8. Éolienne selon la revendication 7, **caractérisée en ce que** le dispositif pour détecter la vitesse du vent détecte la vitesse du vent tridimensionnellement.
